# EUROPÄISCHE PATENTSCHRIFT

(11) **EP 2 769 613 B1**
(45) Veröffentlichungstag und Bekanntmachung des Hinweises auf die Patenterteilung: **19.04.2017**
(21) Anmeldenummer: 14155589.6
(22) Anmeldetag: 18.02.2014
(51) Int. Cl.: A01D 75/28

(54) **Steuerungseinrichtung zum Betreiben einer Erntemaschine und Erntemaschine mit einer solchen Steuerungseinrichtung**
Control device for operating a harvesting machine and harvester with such a control device
Dispositif de commande pour le fonctionnement d'une moissonneuse et moissonneuse dotée d'un tel dispositif de commande

(30) Priorität: 22.02.2013 DE 102013002967
(43) Veröffentlichungstag der Anmeldung: 27.08.2014
(73) Patentinhaber: CLAAS Saulgau GmbH, 88348 Bad Saulgau (DE)
(72) Erfinder: Ober, Martin, 78736 Epfendorf-Trichtingen (DE); Pflanze, Sascha, 14822 Brück (DE)
(74) Vertreter: Epp, Matthias Heinz

(56) Entgegenhaltungen:
- EP-A1- 1 068 784
- EP-A1- 2 520 156
- EP-A2- 1 862 055
- FR-A1- 2 853 492
- US-A- 4 707 971

## Beschreibung

Die Erfindung betrifft eine Steuerungseinrichtung zum Betreiben einer Erntemaschine nach dem Oberbegriff des Anspruchs 1. Des Weiteren betrifft die Erfindung eine Erntemaschine mit einer solchen Steuerungseinrichtung.

Aus der DE 102 34 741 A1 ist eine als Mähwerksanordnung ausgebildete Erntemaschine mit drei als Mähwerke ausgebildeten Arbeitseinheiten bekannt, nämlich einem Frontmähwerk und zwei Heckmähwerken, wobei das Frontmähwerk vorne an ein Trägerfahrzeug und die beiden Heckmähwerke hinten an das Trägerfahrzeug angekoppelt sind. Die aus diesem Stand der Technik bekannte Mähwerksanordnung dient insbesondere dem Mähen von Gras, wobei nach diesem Stand der Technik entweder jede Mähwerksanordnung einen separaten Schwad auslegt, oder das Mähgut der Mähwerke zu einem gemeinsam Schwad vereinigt wird. Das Frontmähwerk sowie die beiden Heckmähwerke sind dabei derart relativ zueinander am Trägerfahrzeug angebunden, dass zwischen dem Frontmähwerk und jedem der beiden Heckmähwerke jeweils eine definierte Messerüberdeckung ausgebildet ist, und zwar derart, dass einerseits die Gesamtmähbreite der Mähwerke maximal ist, jedoch andererseits vermieden wird, dass im Überlappungsbereich zwischen in der Projektion benachbarten Mähwerken ein nicht gemähter Streifen stehen bleibt.

EP 2 520 156 A1 offenbart eine Erntemaschine, bei welcher wenigstens eine erste Querfördereinheit, insbesondere ein erster Bandschwader, zum Befördern von abgemähtem Erntegut in eine erste, quer zur Fahrtrichtung gerichtete Förderrichtung vorgesehen ist und wobei wenigstens eine zweite Querfördereinheit, insbesondere ein zweiter Bandschwader, zum Befördern von abgemähtem Erntegut in eine zweite, quer zur Fahrtrichtung gerichtete Förderrichtung, die der ersten Förderrichtung wenigstens teilweise entgegengesetzt ist, vorgesehen ist, wobei die Querfördereinheiten zwischen einer Arbeits- und einer Transportstellung verstellbar sind, wobei in einem ersten Arbeitsmodus beide Erntegut fördernde Querfördereinheiten eine erste Fördergeschwindigkeit aufweisen, dadurch gekennzeichnet, dass ein zweiter Arbeitsmodus vorgesehen ist, in dem die zweite Querfördereinheit eine zweite Fördergeschwindigkeit aufweist, wobei die zweite Fördergeschwindigkeit kleiner als die Fördergeschwindigkeit der ersten Querfördereinheit ist.

Aus FR 2 853 492 A1 ist eine Landwirtschaftliche Mähmaschine mit mindestens einer frontmontierten Arbeitseinheit bekannt, die dazu bestimmt ist, ein aufrecht stehendes Produkt zu mähen, mit mindestens einer seitlichen Arbeitseinheit, die dazu bestimmt ist, ein aufrecht stehendes Produkt zu mähen, mit Verbindungsvorrichtungen, die dazu bestimmt sind, die Arbeitseinheiten mit einem Triebfahrzeug zu verbinden, wobei mindestens eine der Verbindungsvorrichtungen, bei der Arbeit eine Querverschiebung der entsprechenden Arbeitseinheit in Bezug zu einer Vorschubrichtung der Mähmaschine ermöglicht, mit einem Betätigungselement, das dazu bestimmt ist, die Querverschiebung der mindestens einen Arbeitseinheit hervorzurufen, mit einer Steuervorrichtung, die dazu bestimmt ist, das Betätigungselement zu steuern, wobei die Steuervorrichtung einen Sensor aufweist, der dazu bestimmt ist, den Seitenneigungswinkel der Mähmaschine zu messen, und eine Steuervorrichtung umfasst, die die von dem Sensor kommende Information bearbeitet und einen Verteiler steuert, der dazu bestimmt ist, auf das Betätigungselement einzuwirken, um die mindestens eine seitliche Arbeitseinheit quer zu verschieben, um einen optimalen Überschnittwert beizubehalten.

US 4,707,971 offenbart einen einspurigen Aufsitzmäher mit seitlich abstehenden Mäheinheiten, die sich mit Rädern am Boden abstützen. Die Mäheinheiten können über Hydraulikzylinder angehoben oder abgesenkt werden, wodurch der Aufsitzmäher so an unterschiedliche Geländeprofile angepasst werden kann, dass er stets lotrecht ausgerichtet ist.

Aus der Praxis ist es bekannt, dass jedes Mähwerk über Rollen oder Kufen auf dem zu mähenden Untergrund aufliegt, wobei die Auflagekraft der Mähwerke auf dem zu mähenden Untergrund über einen Entlastungsdruck für die Mähwerke eingestellt werden kann. Je höher der Entlastungsdruck für ein Mähwerk ist, desto geringer fällt dessen Auflagekraft auf dem zu mähenden Untergrund aus. Die Auflagekraft bzw. der Entlastungsdruck kann dabei über hydraulische Stellorgane eingestellt werden, nämlich mit Hilfe einer Steuerungseinrichtung der Mähwerksanordnung.

Ferner ist es aus dem Stand der Technik bekannt, dass dann, wenn das geschnittene Mähgut der einzelnen Mähwerke zu einem gemeinsamen Schwad vereinigt wird, den Heckmähwerken Querfördereinrichtungen zugeordnet sind, die ausgehend vom jeweiligen Heckmähwerk das geschnittene Mähgut nach innen in Richtung auf die Längsachse der Mähwerksanordnung transportieren, um das Mähgut der Heckmähwerke und das Mähgut des Frontmähwerks zu einem gemeinsamen Schwad zu vereinigen. Dies ist ebenfalls aus der DE 102 34 741 A1 bekannt.

Dann, wenn eine solche Mähwerksanordnung in einem Hang betrieben wird, wobei dann ein erstes Mähwerk hangaufwärts einer Längsachse der Mähwerksanordnung und ein zweites Mähwerk hangabwärts der Längsachse der Mähwerksanordnung angeordnet ist, können sich im Betrieb eine Vielzahl von Problemen einstellen.

So unterliegt beim Betrieb einer solchen Mähwerksanordnung in einem Hang dieselbe der Hangabtriebskraft, wodurch die Mähwerksanordnung um ihre Hochachse verdreht wird. Bei der Mähwerksanordnung der DE 102 34 741 A1 entsteht dann zwischen dem Frontmähwerk und dem hangabwärts der Längsachse positionierten Heckmähwerk eine unzureichende Messerüberdeckung der beiden Mähwerke, sodass dann zwischen den beiden Mähwerken ein nicht gemähter Streifen stehen bleibt. Diesem Problem kann bislang nur dadurch Rechnung getragen werden, dass unter Verringerung der Mähbreite der gesamten Mähwerksanordnung die Messerüberdeckung der Mähwerke erhöht wird, oder dass fahrerseitig und damit manuell durch Gegenlenken diesem Verdrehen der Mähwerksanordnung entgegengewirkt wird, wodurch jedoch der zu mähende Untergrund einer stärkeren Belastung ausgesetzt wird. Ferner entsteht dann, wenn das Mähgut der Mähwerke zu einem gemeinsamen Schwad vereinigt wird, bei einem Betrieb im Hang das Problem, dass sich infolge der Hangneigung ein ungleichmäßiger Schwad ausbildet.

Bei anderen Erntemaschinen mit anderen Arbeitseinheiten stellen sich bei einem Betrieb der Erntemaschine in einem Hang ähnliche Probleme ein, so zum Beipsiel bei einer als Schwader ausgebildeten Erntemaschine mit als Kreiseln ausgebildeten Arbeitseinheiten oder bei einem Mähdrescher mit Bandquerförderern. Hiervon ausgehend liegt der vorliegenden Erfindung die Aufgabe zugrunde, eine neuartige Steuerungseinrichtung zum Betreiben einer Erntemaschine sowie eine Erntemaschine mit einer solchen Steuerungseinrichtung zu schaffen.

Diese Aufgabe wird durch eine Steuerungseinrichtung nach Anspruch 1 gelöst. Die erfindungsgemäße Steuerungseinrichtung bestimmt Betriebsparameter für zumindest einige der Arbeitseinheiten automatisch abhängig von einer Neigung des Hangs, in welchem die Erntemaschine in Betrieb ist.

Mit der hier vorliegenden Erfindung wird erstmals vorgeschlagen, dass eine Steuerungseinrichtung einer Erntemaschine mit mehreren Arbeitseinheiten abhängig von der Querneigung des Hangs, in welchem die Erntemaschine in Betrieb ist, Betriebsparameter für die Arbeitseinheiten ermittelt. Hiermit kann den aus dem Stand der Technik bekannten Problemen beim Betreiben der Erntemaschine im Hang automatisch entgegengewirkt werden.

Vorzugsweise liest die Steuerungseinrichtung eine über einen Neigungssensor messtechnisch bestimmte Querneigung und/oder eine einem Navigationssystem bereitgestellte Querneigung des Hangs, in welchem die Erntemaschine in Betrieb ist, über eine Datenschnittstelle ein. Zusätzlich oder alternativ ermittelt die Steuerungseinrichtung die Querneigung des Hangs, in welchem die Erntemaschine in Betrieb ist, rechnerisch.

Die Steuerungseinrichtung kann die Betriebsparameter abhängig von einem Neigungswert oder abhängig von mehreren Neigungswerten ermitteln. Dann, wenn die Steuerungseinrichtung mehrere Neigungswerte verwendet, ist es zum Beispiel möglich, die Neigungswerte durch Vergleich zu plausibilisieren oder aus den mehreren Neigungswerten einen Mittelwert zu bestimmen.

Nach der Erfindung bestimmt die Steuerungseinrichtung als hangneigungsabhängige Betriebsparameter für als Mähwerke ausgebildete Arbeitseinheiten eine Auflagekraft für die Mähwerke oder einen Entlastungsdruck für die Mähwerke automatisch abhängig von der Querneigung des Hangs, in welchem die als Mähwerksanordnung ausgebildete Erntemaschine in Betrieb ist.

Nach einer vorteilhaften Weiterbildung der Erfindung, die bei als Mähwerken ausgebildete Arbeitseinheiten in Kombination mit der Erfindung zum Einsatz kommen kann, bestimmt die Steuerungseinrichtung als hangneigungsabhängige Betriebsparameter für Querförderer eine Fördergeschwindigkeit der Querförderern automatisch abhängig von der Querneigung des Hangs, in welchem die Querförderer in Betrieb sind.

Nach der Erfindung wird die Auflagekraft für die Mähwerke bzw. der Entlastungsdruck für die Mähwerke abhängig von der Querneigung des Hangs bestimmt, wodurch dann einer Verdrehung der Mähwerksanordnung um die Hochachse derselben automatisch entgegengewirkt werden kann. In diesem Fall kann dann unter Maximierung der Gesamtmähbreite der Mähwerksanordnung verhindert werden, dass beim Betrieb im Hang infolge einer unzureichenden Messerüberdeckung zwischen zwei Mähwerken ein nicht gemähter Streifen stehen bleibt. Ferner kann bedingt dadurch, dass ein manuelles fahrerseitiges Gegenlenken überflüssig wird, eine Beschädigung des zu mähenden Untergrunds vermieden werden. Mit der zweiten vorteilhaften Weiterbildung der Erfindung kann insbesondere bei einem Betrieb der Mähwerksanordnung im Hang und bei Vereinigung des Mähguts der Mähwerke zu einem gemeinsamen Schwad ein gleichmäßiger Schwad ausgebildet werden.

Die erfindungsgemäße Erntemaschine ist in Anspruch 13 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Ausführungsbeispiel einer als Mähwerksanordnung ausgebildeten Erntemaschine in einer Ansicht von hinten;
- Fig. 2: die Mähwerksanordnung der Fig. 1 in Draufsicht; und
- Fig. 3: steuerungsseitige Details der Mähwerksanordnung der Fig. 1 und 2.

Die hier vorliegende Erfindung betrifft eine Erntemaschine und eine Steuerungseinrichtung für eine Erntemaschine. Nachfolgend wird die Erfindung an Hand einer als Mähwerksanordnung ausgebildeten Erntemaschine beschreiben.

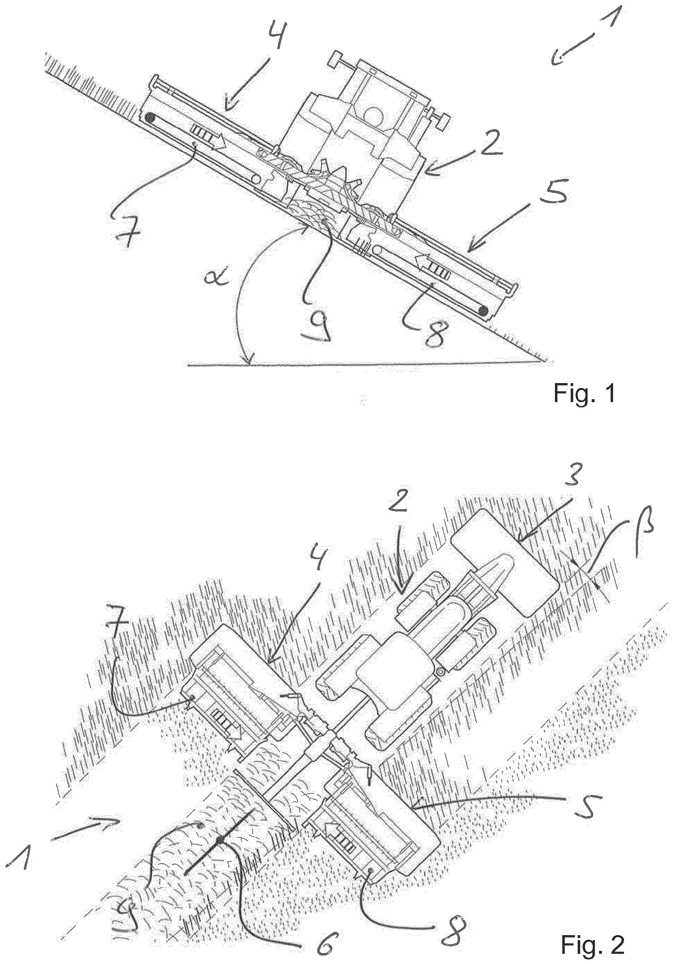

Fig. 1 zeigt ein bevorzugtes Ausführungsbeispiel einer Mähwerksanordnung 1, wobei die Mähwerksanordnung 1 ein Trägerfahrzeug 2 umfasst, an welches ein Frontmähwerk 3 und zwei Heckmähwerke 4 und 5 angekoppelt sind.

Das Frontmähwerk 3 ist im gezeigten Ausführungsbeispiel derart mittig am Trägerfahrzeug 2 angekoppelt, dass eine Längsachse des Frontmähwerks 3 mit einer Längsachse 6 der Mähwerksanordnung zusammenfällt.

Die beiden Heckmähwerke 4 und 5 sind von der Längsachse 6 der Mähwerksanordnung 1 beabstandet, nämlich derart, dass dann, wenn wie in Fig. 1 und 2 gezeigt, die Mähwerksanordnung 1 in einem Hang betrieben wird, ein erstes Mähwerk 4 hangaufwärts der Längsachse 6 der Mähwerksanordnung 1 angeordnet ist, wohingegen ein zweites Mähwerk 5 hangabwärts der Längsachse 6 der Mähwerksanordnung 1 angeordnet ist.

In Fig. 1 ist eine Querneigung α des Hangs gezeigt, in welchem die Mähwerksanordnung 1 der Fig. 1 und 2 betrieben wird, wobei sich die Fahrtrichtung bzw. Fortbewegungsrichtung der Mähwerksanordnung 1 quer zur Hangneigung α erstreckt. Wie Fig. 1 und 2 entnommen werden kann, umfasst jedes der beiden Heckmähwerke 4 und 5 einen Querförderer 7 bzw. 8, mit Hilfe dessen das vom jeweiligen Heckmähwerk 4, 5 gemähte bzw. geschnittene Mähgut in Richtung auf die Längsachse 6 der Mähwerksanordnung 1 gefördert werden kann, um mit dem Mähgut des Frontmähwerks 3 zu einem gemeinsamen Schwad 9 vereinigt zu werden.

Fig. 2 verdeutlicht für die gezeigte Mähwerksanordnung 1, dass bei einem Betrieb im Hang infolge der Hangabtriebskraft die Mähwerksanordnung 1 um ihre Hochasche derart verdreht wird abdriftet, dass sich zwischen dem Frontmähwerk 3 und dem hangabwärts der Längsmittelachse 6 positionierten Heckmähwerk 5 ein Winkelversatz β ausbildet, der eine unzureichende Messerüberdeckung der Messer der beiden Mähwerke 3 und 5 bewirkt und damit verursacht, dass ein nicht gemähter Streifen zwischen diesen beiden Mähwerken 3 und 5 stehen bleibt.

Der Betrieb einer solchen Mähwerksanordnung 1 wird von einer Steuerungseinrichtung abhängig von Betriebsparametern gesteuert und/oder geregelt. Im Sinne der hier vorliegenden Erfindung wird nun vorgeschlagen, dass die Steuerungseinrichtung für die Mähwerksanordnung 1 abhängig von der Neigung α des Hangs, also abhängig von der Querneigung α des Hangs, in welchem die Mähwerksanordnung 1 betrieben wird, Betriebsparameter für den Betrieb der Mähwerke der Mähwerksanordnung 1 automatisch ermittelt.

Der Betrieb, also die Steuerung und/oder Regelung der Mähwerke der Mähwerksanordnung 1, erfolgt demnach automatisch abhängig von der Hangquerneigung α des Hangs, in welchem die Mähwerksanordnung 1 betrieben wird. Hiermit ist es automatisch möglich, den aus dem Stand der Technik bekannten Problemen beim Betreiben einer Mähwerksanordnung 1 in einem Hang entgegenzuwirken.

Die Hangquerneigung α des Hangs, in welchem die Mähwerksanordnung 1 betrieben wird, kann zum Beispiel mit Hilfe eines Neigungssensors messtechnisch bestimmt werden, wobei dann die Steuerungseinrichtung, welche die Betriebsparameter für das Mähwerk 1 automatisch abhängig von der Hangquerneigung α bestimmt, die messtechnisch bestimmte Querneigung α über eine Datenschnittstelle einliest.

Der Neigungssensor kann bei der Mähwerksanordnung der Fig. 1 und 2 Bestandteil des Trägerfahrzeugs 2 oder auch Bestandteil eines der Mähwerke 3, 4 und 5 sein.

Zusätzlich oder alternativ ist es möglich, dass die Hangquerneigung α des Hangs, in welchem die Mähwerksanordnung 1 betrieben wird, von einem Navigationssystem abhängig von der aktuellen Position der Mähwerksanordnung 1 und abhängig von der Fahrtrichtung der Mähwerksanordnung 1 bereitgestellt wird. Diese Querneigung α kann dann von der Steuerungseinrichtung wiederum über eine Datenschnittstelle eingelesen werden.

Ferner ist es möglich, dass die Hangquerneigung α des Hangs, in welchem die Mähwerkanordnung 1 betrieben wird, von der Steuerungseinrichtung rechnerisch ermittelt wird, zum Beispiel auf Basis anderer Messwerte und/oder berechneter Größen, die der Steuerungseinrichtung zur Verfügung stehen.

Ferner ist es möglich, dass die Steuerungseinrichtung mehrere solcher Querneigungswerte α des Hangs, in welchem die Mähwerksanordnung in Betrieb ist, zur Ermittlung der Betriebsparameter für die Mähwerke der Mähwerksanordnung 1 verwendet, um zum Beispiel unterschiedliche Hangquerneigungswerte α zu plausibilisieren oder aus denselben zur Ermittlung der Betriebsparameter einen Mittelwert zu bilden.

Nach der hier vorliegenden Erfindung ermittelt die Steuerungseinrichtung als hangneigungsabhängige Betriebsparameter für die Ansteuerung der Mähwerksanordnung 1 eine Auflagekraft oder einen Entlastungsdruck für die Mähwerke der Mähwerksanordnung 1, nämlich automatisch abhängig von der Hangquerneigung α des Hangs, in welchem die Mähwerksanordnung 1 betrieben wird.

Im Ausführungsbeispiel der Fig. 1 und 2 ermittelt die Steuerungseinrichtung einerseits für das hangabwärtige Heckmähwerk 5 und andererseits für das hangaufwärtige Heckmähwerk 4 eine individuelle Auflagekraft bzw. einen individuellen Entlastungsdruck, nämlich derart, dass für das hangabwärtige Heckmähwerk 5 eine größere Auflagekraft bzw. ein geringerer Entlastungsdruck vorgegeben wird als für das hangaufwärtige Heckmähwerk 4, wodurch sich die am Boden wirkende Reibungskraft bzw. Bremskraft am hangabwärtigen Heckmähwerk 5 vergrößert und am hangaufwärtigen Heckmähwerk 4 verringert.

In diesem Fall kann vorgesehen sein, dass die Steuerungseinrichtung bezogen auf eine Auflagekraft oder bezogen auf einem Entlastungsdruck, welche bzw. welcher für den Betrieb der Mähwerksanordnung 1 in einer Ebene für beide Heckmähwerke 4 und 5 gültig bzw. identisch ist, für das hangabwärtige Heckmähwerk 5 die Auflagekraft automatisch erhöht bzw. den Entlastungsdruck für das hangabwärtige Heckmähwerk 5 automatisch verringert und/oder für das hangaufwärtige Heckmähwerk 4 die Auflagekraft automatisch verringert bzw. den Entlastungsdruck automatisch erhöht.

Hierdurch wird dann über das hangabwärtige Heckmähwerk 5 die Mähwerksanordnung 1 stärker gebremst, wodurch die hangabtriebskraftabhängige Verdrehung der Mähwerksanordnung 1 automatisch kompensiert werden kann, indem ein aus der Bremskraftdifferenz zwischen dem hangabwärtigen und dem hangaufwärtigen Heckmähwerk resultierendes Drehmoment der Verdrehung bzw. dem Abdriften entgegen wirkt.

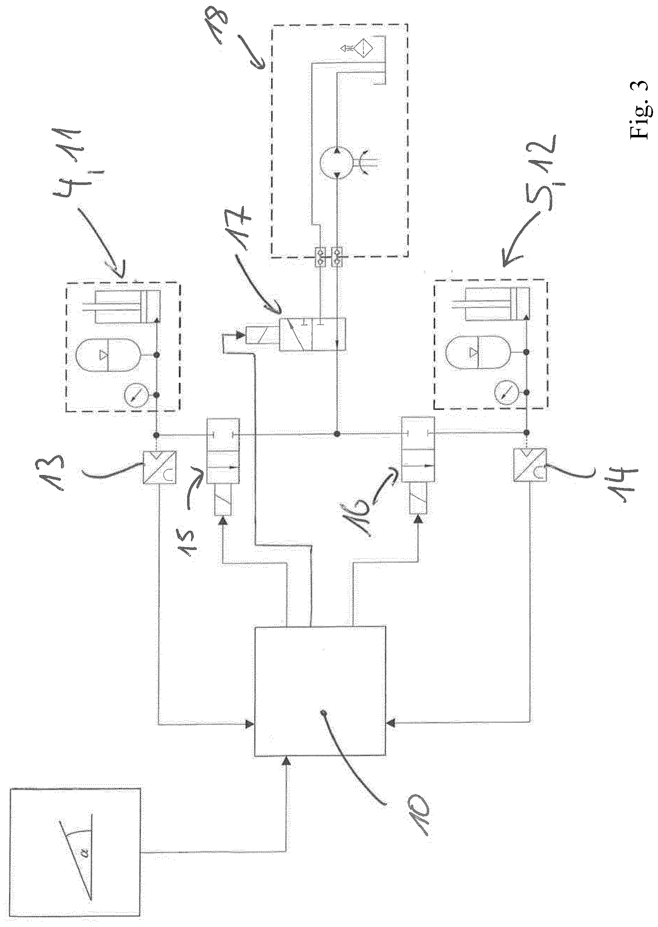

Fig. 3 zeigt ein Ausführungsbeispiel steuerungsseitiger Details der Mähwerksanordnung 1 der Fig. 1 und 2, nämlich Details zur hydraulischen Ansteuerung der Heckmähwerke 4 und 5 der Mähwerksanordnung 1, wobei in Fig. 3 eine Steuerungseinrichtung 10 gezeigt ist, der als Eingangsgröße und anderem ein Ist-Wert der Querneigung α des Hangs bereitgestellt wird, in welcher die Mähwerksanordnung 1 betrieben wird.

Der Ist-Wert der Querneigung α kann auf die oben beschriebene Art und Weise messtechnisch und/oder rechnerisch ermittelt werden. Jedem der beiden Heckmähwerke 4 und 5 ist jeweils ein hydraulisches Aktorsystem 11 bzw. 12 zugeordnet, mit Hilfe dessen über die Einstellung des Entlastungsdrucks für das jeweilige Heckmähwerk 4, 5 die Auflagekraft des jeweiligen Heckmähwerks 4, 5 auf dem zu mähenden Untergrund eingestellt werden kann.

Über hydraulische Sensoren 13 bzw. 14 können Ist-Werte des Entlastungsdrucks bzw. der Auflagekraft der beiden Heckmähwerke 4 und 5 Mähwerksanordnung 1 erfasst und als Eingangsgrößen der Steuerungseinrichtung 10 bereitgestellt werden.

Die Steuerungseinrichtung 10 ermittelt abhängig vom Ist-Wert der Querneigung α des Hangs, in welchem die Mähwerksanordnung 1 betrieben wird, Soll-Werte für die Auflagekraft bzw. den Entlastungsdruck der beiden Heckmähwerke 4 und 5, wobei die von den hydraulischen Sensoren 13, 14 bereitgestellten Ist-Werte mit den entsprechenden Soll-Werten verglichen werden, und wobei abhängig von diesem Vergleich die Steuerungseinrichtung 10 als Ausgangsgrößen Stellsignale ermittelt, um hydraulische Stellglieder 15, 16 und 17 derart anzusteuern, dass im Bereich jedes Heckmähwerks 4, 5 der Ist-Wert der Auflagekraft bzw. des Entlastungsdrucks dem hangquerneigungsabhängigen Soll-Wert der Auflagekraft bzw. des Entlastungsdrucks, den die Steuerungseinrichtung 10 automatisch bestimmt, folgt.

Bei den hydraulischen Stellgliedern 15, 16 und 17 handelt es sich im gezeigten Ausführungsbeispiel um Hydraulikventile, mit Hilfe derer ein hydraulischer Druck in den Aktorsystemen 11 und 12 dadurch eingestellt werden kann, dass das jeweilige Aktorsystem 11, 12 entweder ausgehend von einem Hydraulikölspeicher 18 befüllt oder in Richtung auf den Hydraulikölspeicher 18 entleert wird. Hiermit kann dann für jedes Heckmähwerk 4, 5 ein hangneigungsabhängiger, individueller hydraulischer Entlastungsdruck und damit eine individuelle Auflagekraft des jeweiligen Heckmähwerks 4, 5 auf dem zu mähenden Untergrund eingestellt werden. Die steuerungsseitigen Details der Fig. 3 erlauben es, die Aktorsysteme 11 und 12 zeitlich nacheinander zu verstellen.

Es ist selbstverständlich, dass das Hydrauliksystem der Fig. 3 alternativ auch so angepasst werden kann, dass ein zeitgleiche Verstellung der Aktorsysteme 11 und 12 möglich ist.

Nach einer vorteilhaften Weiterbildung der Erfindung, die in Kombination mit der hangneigungsabhängigen Beeinflussung der Auflagekraft für die Heckmähwerke 4 und 5 verwendet werden kann, ist vorgesehen, dass die Steuerungseinrichtung der Mähwerksanordnung 1 als hangneigungsabhängige Betriebsparameter eine Fördergeschwindigkeit von Querförderern 7, 8 der Heckmähwerke 4, 5 automatisch abhängig von der Hangquerneigung des Hangs bestimmt, in welchem die Mähwerksanordnung 1 betrieben wird. Hierbei ist für die Mähwerksanordnung 1 der Fig. 1 und 2 vorgesehen, dass dieselbe für den Querförderer 8 des hangabwärtigen Heckmähwerks 5 eine größere Fördergeschwindigkeit vorgibt als für den Querförderer 7 des hangaufwärtigen Heckmähwerks 4. Bezogen auf eine Fördergeschwindigkeit, die bei einem Betrieb der Mähwerksanordnung 1 in der Ebene für beide Querförderer 7 und 8 beider Heckmähwerke 4 und 5 identisch ist, verringert die Steuerungseinrichtung für den Querförderer 7 des hangaufwärtigen Heckmähwerks 4 die Fördergeschwindigkeit automatisch, wohingegen die Steuerungseinrichtung die Fördergeschwindigkeit für Querförderer 8 des hangabwärtigen Heckmähwerks 5 automatisch erhöht. Hiermit kann das Mähgut der beiden Heckmähwerke 4 und 5 unter Ausbildung eines gleichmäßigen Schwads mit dem Mähgut des Frontmähwerks 3 vereinigt werden.

Es liegt demnach im Sinne der Erfindung, dass eine Steuerungseinrichtung auf Basis eines messtechnisch und/oder rechnerisch ermittelten Ist-Werts einer Querneigung eines Hangs, in welcher eine Erntemaschine betrieben wird, automatisch Betriebsparameter für den Betrieb der Erntemaschine bestimmt, nämlich Betriebsparameter für die Steuerung und/oder Regelung des Betriebes mindestsens einer in Längsrichtung der Erntemaschine gesehen hangabwärtigen und mindestsens einer hangaufwärtigen Arbeitseinheit. Die Erntemaschine bzw. die Arbeitseinheiten derselben werden dann auf Basis dieser Betriebsparameter automatisch betrieben, wobei es sich bei den hangneigungsabhängigen Betriebsparametern vorzugsweise um regelungsseitige Soll-Werte der Arbeitseinheiten handelt.

### Bezugszeichenliste

- 1: Erntemaschine / Mähwerksanordnung
- 2: Trägerfahrzeug
- 3: Arbeitseinheit / Frontmähwerk
- 4: Arbeitseinheit / Heckmähwerk
- 5: Arbeitseinheit / Heckmähwerk
- 6: Längsmittelachse
- 7: Querförderer
- 8: Querförderer
- 9: Schwad
- 10: Steuerungseinrichtung
- 11: Aktorsystem
- 12: Aktorsystem
- 13: Sensor
- 14: Sensor
- 15: Stellglied
- 16: Stellglied
- 17: Stellglied
- 18: Hydraulikölspeicher

## Patentansprüche

1. Steuerungseinrichtung zum Betreiben einer Erntemaschine (1), wobei die Erntemaschine (1) zumindest zwei Arbeitseinheiten (3, 4, 5) aufweist, die quer zur Längsrichtung bzw. Fortbewegungsrichtung der Erntemaschine (1) gesehen derart nebeneinander angeordnet sind, dass bei einem Betrieb der Erntemaschine (1) in einem Hang eine erste Arbeitseinheit (4) hangaufwärts einer Längsachse (6) der Erntemaschine (1) und eine zweite Arbeitseinheit (5) hangabwärts der Längsachse (6) der Erntemaschine (1) angeordnet ist, und wobei die Steuerungseinrichtung den Betrieb der Arbeitseinheiten (3, 4, 5) abhängig von Betriebsparametern steuert oder regelt, wobei dieselbe Betriebsparameter für zumindest einige der Arbeitseinheiten (3, 4, 5) automatisch abhängig von einer Neigung des Hangs bestimmt, in welchem die Erntemaschine (1) in Betrieb ist, **dadurch gekennzeichnet, dass** dieselbe als hangneigungsabhängige Betriebsparameter für als Mähwerke (4, 5) ausgebildete Arbeitseinheiten eine Auflagekraft für die Mähwerke (4, 5) oder einen Entlastungsdruck für die Mähwerke (4, 5) automatisch abhängig von der Querneigung des Hangs bestimmt, in welchem die als Mähwerksanordnung (1) ausgebildete Erntemaschine in Betrieb ist.

2. Steuerungseinrichtung nach Anspruch 1, **dadurch gekennzeichnet, dass** dieselbe eine über einen Neigungssensor messtechnisch bestimmte Querneigung des Hangs, in welchem die Erntemaschine (1) in Betrieb ist, über eine Datenschnittstelle einliest.

3. Steuerungseinrichtung nach Anspruch 1 oder 2, **dadurch gekennzeichnet, dass** dieselbe eine von einem Navigationssystem bereitgestellte Querneigung des Hangs, in welchem die Erntemaschine (1) in Betrieb ist, über eine Datenschnittstelle einliest.

4. Steuerungseinrichtung nach einem der Ansprüche 1 bis 3, **dadurch gekennzeichnet, dass** dieselbe die Querneigung des Hangs, in welchem die Erntemaschine (1) in Betrieb ist, rechnerisch ermittelt.

5. Steuerungseinrichtung nach einem der vorangehenden Ansprüche, **dadurch gekennzeichnet, dass** dieselbe für ein hangabwärtiges Heckmähwerk (5) eine größere Auflagekraft oder einen geringeren Entlastungsdruck vorgibt als für ein hangaufwärtiges Heckmähwerk (4).

6. Steuerungseinrichtung nach einem der vorangehenden Ansprüche, **dadurch gekennzeichnet, dass** die Steuerungseinrichtung bezogen auf eine Auflagekraft oder einen Entlastungsdruck, die oder der für einen Betrieb der Mähwerksanordnung (1) in einer Ebene für beide Heckmähwerke (4, 5) gültig ist, für das hangabwärtige Heckmähwerk (5) die Auflagekraft automatisch erhöht und/oder den Entlastungsdruck automatisch verringert und für das hangaufwärtige Heckmähwerk (4) die Auflagekraft automatisch verringert oder den Entlastungsdruck automatisch erhöht.

7. Steuerungseinrichtung nach einem der Ansprüche 1 bis 6, **dadurch gekennzeichnet, dass** dieselbe als hangneigungsabhängige Betriebsparameter für als Mähwerke (4, 5) ausgebildete Arbeitseinheiten eine Fördergeschwindigkeit von Querförderern (7, 8) der Mähwerke (4, 5) automatisch abhängig von der Querneigung des Hangs bestimmt, in welchem die als Mähwerksanordnung (1) ausgebildete Erntemaschine in Betrieb ist.

8. Steuerungseinrichtung nach Anspruch 7, **dadurch gekennzeichnet, dass** dieselbe für den Querförderer (8) eines hangabwärtigen Heckmähwerks (5) eine größere Fördergeschwindigkeit vorgibt als für den Querförderer (7) eines hangaufwärtigen Heckmähwerks (4).

9. Steuerungseinrichtung nach Anspruch 7 oder 8, **dadurch gekennzeichnet, dass** die Steuerungseinrichtung bezogen auf eine Fördergeschwindigkeit, die für einen Betrieb der Mähwerksanordnung (1) in einer Ebene für die Querförderer beider Heckmähwerke gültig ist, für den Querförderer (8) des hangabwärtigen Heckmähwerks (5) die Fördergeschwindigkeit automatisch erhöht und für den Querförderer (7) des hangaufwärtigen Heckmähwerks (4) die Fördergeschwindigkeit automatisch verringert.

10. Steuerungseinrichtung nach einem der Ansprüche 1 bis 4, **dadurch gekennzeichnet, dass** dieselbe als hangneigungsabhängige Betriebsparameter für mit Querförderer (7, 8) ausgestattete Arbeitseinheiten eine Fördergeschwindigkeit von Querförderern (7, 8) automatisch abhängig von der Querneigung des Hangs bestimmt, in welchem die Querförderer (7, 8) in Betrieb sind.

11. Steuerungseinrichtung nach Anspruch 10, **dadurch gekennzeichnet, dass** dieselbe für einen hangabwärtigen Querförderer (8) eine größere Fördergeschwindigkeit vorgibt als für einen hangaufwärtigen Querförderer (7).

12. Steuerungseinrichtung nach Anspruch 10 oder 11, **dadurch gekennzeichnet, dass** die Steuerungseinrichtung bezogen auf eine Fördergeschwindigkeit, die für einen Betrieb der Querförderer (7, 8) in einer Ebene für beide Querförderer gültig ist, für den hangabwärtigen Querförderer (8) die Fördergeschwindigkeit automatisch erhöht und für den hangaufwärtigen Querförderer (7) die Fördergeschwindigkeit automatisch verringert.

13. Erntemaschine, insbesondere Mähwerksanordnung, **gekennzeichnet durch** eine Steuerungseinrichtung (10) nach einem der Ansprüche 1 bis 12.

## Claims

1. A control device for operating a harvester (1), wherein the harvester (1) has at least two working units (3, 4, 5) which are arranged in mutually juxtaposed relationship viewed transversely relative to the longitudinal direction or the direction of advance of the harvester (1) in such a way that in operation of the harvester (1) on a slope a first working unit (4) is arranged upslope of a longitudinal axis (6) of the harvester (1) and a second working unit (5) is arranged downslope of the longitudinal axis (6) of the harvester (1), and wherein the control device provides for open-loop or closed-loop control of the operation of the working units (3, 4, 5) in dependence on operating parameters, wherein same determines operating parameter for at least some of the working units (3, 4, 5) automatically in dependence of an inclination of the slope on which the harvester (1) is in operation, **characterised in that** same determines as slope inclination-dependent operating parameters for working units in the form of mowing mechanisms (4, 5) a contact force for the mowing mechanisms (4, 5) or a load relief pressure for the mowing mechanisms (4, 5) automatically in dependence on the transverse inclination of the slope on which the harvester which is in the form of a mowing mechanism arrangement (1) is in operation.

2. A control device according to claim 1 **characterised in that** same reads in by way of a data interference a transverse inclination, that is determined by measurement technology by way of an inclination sensor, of the slope on which the harvester (1) is in operation.

3. A control device according to claim 1 or claim 2 **characterised in that** it reads in by way of a data interference a transverse inclination, that is provided by a navigation system, of the slope on which the harvester (1) is in operation.

4. A control device according to one of claims 1 to 3 **characterised in that** it ascertains by computation the transverse inclination of the slope on which the harvester (1) is in operation.

5. A control device according to one of the preceding claims **characterised in that** it sets a greater contact force or a lesser relief pressure for a downslope rear mowing mechanism (5) than for an upslope rear mowing mechanism (4).

6. A control device according to one of the preceding claims **characterised in that** in relation to a contact force or a relief pressure which is applicable for operation of the mowing mechanism arrangement (1) in a plane for both rear mowing mechanisms (4, 5) the control device for the downslope rear mowing mechanism (5) automatically increases the contact force and/or automatically reduces the relief pressure and for the upslope rear mowing mechanism (4) it automatically reduces the contact force or automatically increases the relief pressure.

7. A control device according to one of claims 1 to 6 **characterised in that** as slope inclination-dependent operating parameters for working units in the form of mowing mechanisms (4, 5) it determines a conveyor speed of transverse conveyors (7, 8) of the mowing mechanisms (4, 5) automatically in dependence on the transverse inclination of the slope on which the harvester in the form of the mowing mechanism arrangement (1) is in operation.

8. A control device according to claim 7 **characterised in that** for the transverse conveyor (8) of a downslope rear mowing mechanism (5) it sets a greater conveyor speed than for the transverse conveyor (7) of an upslope rear mowing mechanism (4).

9. A control device according to claim 7 or claim 8 **characterised in that** in relation to a conveyor speed which is applicable for operation of the mowing mechanism arrangement (1) in a plane for the transverse conveyors of both rear mowing mechanisms the control device automatically increases the conveyor speed for the transverse conveyor (8) of the downslope rear mowing mechanism (5) and automatically reduces the conveyor speed for the transverse conveyor (7) of the upslope rear mowing mechanism (4).

10. A control device according to one of claims 1 to 4 **characterised in that** as slope inclination-dependent operating parameters for working units equipped with transverse conveyors (7, 8) it determines a conveyor speed of transverse conveyors (7, 8) automatically in dependence on the transverse inclination of the slope on which the transverse conveyors (7, 8) are in operation.

11. A control device according to claim 10 **characterised in that** for a downslope transverse conveyor (8) it sets a greater conveyor speed than for an upslope transverse conveyor (7).

12. A control device according to claim 10 or claim 11 **characterised in that** in relation to a conveyor speed which is applicable for operation of the transverse conveyor (7, 8) in a plane for both transverse conveyors the control device automatically increases the conveyor speed for the downslope transverse conveyor (8) and automatically reduces the conveyor speed for the upslope transverse conveyor (7).

13. A harvester, in particular a mowing mechanism arrangement, **characterised by** a control device (10) according to one of claims 1 to 12.

## Revendications

1. Dispositif de commande pour exploiter une machine de récolte (1), la machine de récolte (1) comportant au moins deux unités de travail (3, 4, 5) qui, vues transversalement à la direction longitudinale, respectivement à la direction de marche de la machine de récolte (1), sont disposées côte à côte, de sorte que, lors d'une exploitation de la machine de récolte (1) dans un dévers, une première unité de travail (4) se trouve en amont d'un axe longitudinal (6) de la machine de récolte (1) et qu'une seconde unité de travail (5) se trouve en aval de l'axe longitudinal (6) de la machine de récolte (1), et le dispositif de commande commandant ou régulant l'exploitation des unités de travail (3, 4, 5) en fonction de paramètres d'exploitation, ledit dispositif de commande définissant automatiquement, pour au moins certaines des unités de travail (3, 4, 5), des paramètres d'exploitation en fonction d'une inclinaison du dévers dans lequel la machine de récolte (1) est exploitée, **caractérisé en ce que** ledit dispositif de commande définit automatiquement comme paramètres d'exploitation dépendants du dévers pour des unités de travail conformées en têtes de fauchage (4, 5) une force d'appui des têtes de fauchage (4, 5) ou une pression de décharge des têtes de fauchage (4, 5) en fonction de l'inclinaison transversale du dévers dans lequel la machine de récolte conformée en agencement de têtes de fauchage (1) est en exploitation.

2. Dispositif de commande selon la revendication 1, **caractérisé en ce que**, par l'intermédiaire d'une interface de données, il enregistre une inclinaison transversale, déterminée par voie métrologique à l'aide d'un capteur d'inclinaison, du dévers dans lequel la machine de récolte (1) est en exploitation.

3. Dispositif de commande selon la revendication 1 ou 2, **caractérisé en ce que**, par l'intermédiaire d'une interface de données, il enregistre une inclinaison transversale, fournie par un système de navigation, du dévers dans lequel la machine de récolte (1) est en exploitation.

4. Dispositif de commande selon une des revendications 1 à 3, **caractérisé en ce qu'**il détermine par le calcul l'inclinaison transversale du dévers dans lequel la machine de récolte (1) est en exploitation.

5. Dispositif de commande selon une des revendications précédentes, **caractérisé en ce qu'**il prescrit une force d'appui plus élevée ou une pression de décharge plus réduite pour une tête de fauchage arrière aval (5) que pour une tête de fauchage arrière amont (4).

6. Dispositif de commande selon une des revendications précédentes, **caractérisé en ce que**, par rapport à une force d'appui ou à une pression de décharge valable pour les deux têtes de fauchage arrière (4, 5) pour une exploitation de l'agencement de têtes de fauchage (1) dans un plan, le dispositif de commande augmente automatiquement la force d'appui et/ou réduit automatiquement la pression de décharge pour la tête de fauchage arrière aval (5) et réduit automatiquement la force d'appui ou augmente automatiquement la pression de décharge pour la tête de fauchage arrière amont (4).

7. Dispositif de commande selon une des revendications 1 à 6, **caractérisé en ce qu'**il définit automatiquement, comme paramètres d'exploitation dépendants du dévers pour des unités de travail conformées en têtes de fauchage (4, 5), une vitesse de convoyage de convoyeurs transversaux (7, 8) des têtes de fauchage (4, 5) en fonction de l'inclinaison transversale du dévers dans lequel la machine de récolte conformée en agencement de têtes de fauchage (1) est en exploitation.

8. Dispositif de commande selon la revendication 7, **caractérisé en ce qu'**il prescrit pour le convoyeur transversal (8) d'une tête de fauchage arrière aval (5) une vitesse de convoyage plus élevée que pour le convoyeur transversal (7) d'une tête de fauchage arrière amont (4).

9. Dispositif de commande selon la revendication 7 ou 8, **caractérisé en ce que**, par rapport à une vitesse de convoyage valable pour les convoyeurs transversaux des deux têtes de fauchage arrière pour une exploitation de l'agencement de têtes de fauchage (1) dans un plan, le dispositif de commande augmente automatiquement la vitesse de convoyage du convoyeur transversal (8) de la tête de fauchage arrière aval (5) et réduit automatiquement la vitesse de convoyage du convoyeur transversal (7) de la tête de fauchage arrière amont (4).

10. Dispositif de commande selon une des revendications 1 à 4, **caractérisé en ce qu'**il détermine automatiquement, comme paramètres d'exploitation dépendants du dévers pour des unités de travail équipées de convoyeurs transversaux (7, 8), une vitesse de convoyage de convoyeurs transversaux (7, 8) en fonction de l'inclinaison transversale du dévers dans lequel les convoyeurs transversaux (7, 8) sont en exploitation.

11. Dispositif de commande selon la revendication 10, **caractérisé en ce qu'**il prescrit pour un convoyeur transversal aval (8) une vitesse de convoyage plus élevée que pour un convoyeur transversal amont (7).

12. Dispositif de commande selon la revendication 10 ou 11, **caractérisé en ce que**, par rapport à une vitesse de convoyage valable pour les deux convoyeurs transversaux pour une exploitation des convoyeurs transversaux (7, 8) dans un plan, le dispositif de commande augmente automatiquement la vitesse de convoyage pour le convoyeur transversal aval (8) et réduit automatiquement la vitesse de convoyage pour le convoyeur transversal amont (7).

13. Machine de récolte, en particulier agencement de têtes de fauchage, **caractérisée par** un dispositif de commande (10) selon une des revendications 1 à 12.
